Europäisches Patentamt

European Patent Office

Office européen des brevets

(11) Publication number: **0 430 596 A1**

## EUROPEAN PATENT APPLICATION

(21) Application number: 90312759.5

(51) Int. Cl.⁵: **B29C 47/20**

(22) Date of filing: 23.11.90

(30) Priority: 28.11.89 JP 137824/89 U

(43) Date of publication of application:
05.06.91 Bulletin 91/23

(84) Designated Contracting States:
DE FR GB IT Bulletin 3

(71) Applicant: ISHIKAWAJIMA-HARIMA JUKOGYO
KABUSHIKI KAISHA
2-1, Ote-machi 2-chome
Chiyoda-ku Tokyo 100(JP)

(72) Inventor: Kawabata, Kotaro
No. 1836-11, Kamiwada
Yamato-shi, Kanagawa-ken 242(JP)
Inventor: Sato, Kazuyuki
(1202-203), No. 2, Shiomidai 1-chome,
Isogo-ku
Yokohama-shi, Kanagawa-ken 235(JP)

(74) Representative: Jennings, Nigel Robin et al
KILBURN & STRODE 30 John Street
London WC1N 2DD(GB)

(54) Parison head for use in a multi-layer blow moulding machine.

(57) A parison head for use in a multi-layer blow moulding machine comprises a head body (1), a core (2) within the head body, a mandrel (4) at one end of the core which, together with the head body, defines an annular extrusion slit (6), a plurality of annular accumulator spaces (7-11) concentric with the core and a plurality of annular passages (12-16), each connecting one end of respective accumulator space with the extrusion slit. At least one of the passages (12-16) includes an annular valve (47) which normally closes the passage but is arranged to be opened when the pressure of the feed material in the associated passage exceeds a predetermined value.

Fig. 3

## PARISON HEAD FOR USE IN A MULTI-LAYER BLOW MOULDING MACHINE

The present invention relates to a parison head for use in a multi-layer blow moulding machine and is concerned with that type of such parison head which comprises a head, a core within the head, a mandrel at one end of the core which, together with the head, defines an annular extrusion slit, a plurality of annular accumulators concentric with the core and a plurality of annular passages, each connecting one end of a respective accumulator with the slit. In use, a respective feed material is supplied into each accumulator, e.g. by extruders, and a respective annular piston within each accumulator is actuated to force the feed material within it through the associated passage and out through the extrusion slit.

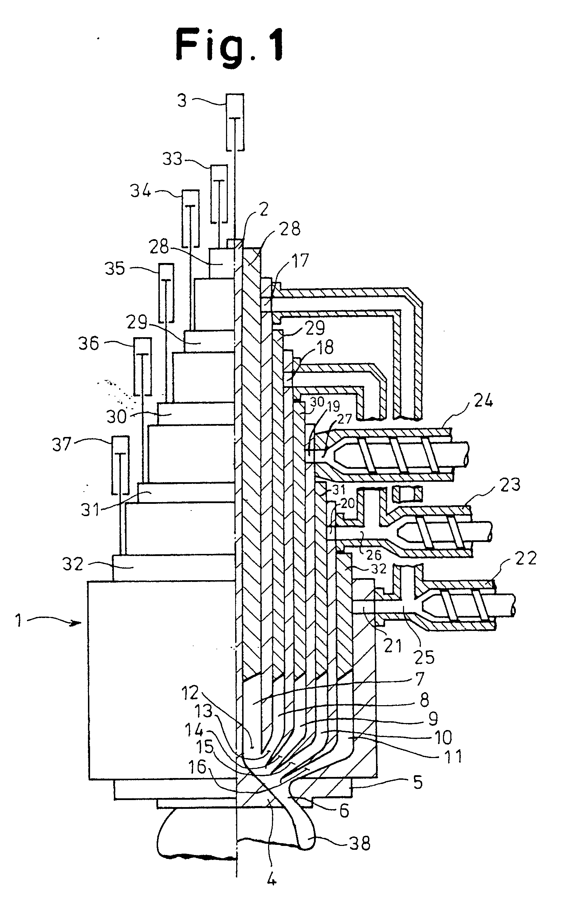

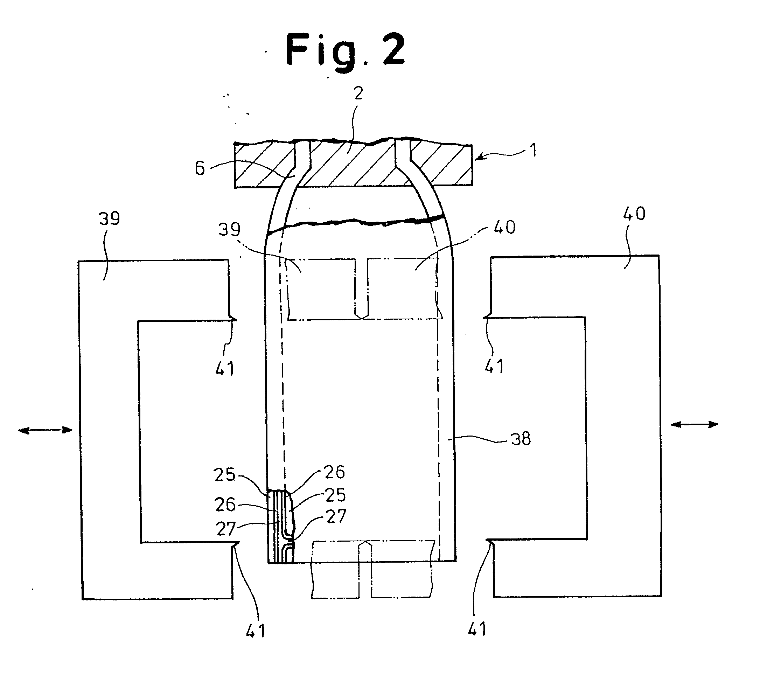

A known parison head of this type is illustrated in Figures 1 and 2 of the accompanying drawings in which Figure 1 is a partially sectioned side view of a conventional parison head and Figure 2 is a side view showing two mould halves below the head of Figure 1.

Reference numeral 1 denotes a head body; 2, a core located at the centre of the body 1 and vertically movable by a cylinder 3; 4, a conical mandrel on the bottom of the core 2; 5, a die mounted on the bottom of the body 1 to define together with the mandrel 4 a tapered annular slit 6; 7-11, annular accumulator spaces or accumulators within the body 1 and concentric with the core 2; 12-16, tapered annular passages connecting the accumulators 7-11 with the slit 6; 17-21, material supply ports at the upper ends of the accumulators 7-11; 22-24, feed extruders for supplying materials 25-27, such as molten resin, to the ports 17 and 21, 18 and 20 and 19, respectively; 28-32, annular plungers for extruding the materials 25-27 in the accumulators 7-11 through the slit 6 to the exterior, actuated by injection cylinders 33-37, respectively; and 38, a five-layered cylindrical parison extruded from the slit 6.

Reference numerals 39 and 40 designate a pair of mould halves horizontally movable towards and away from each other for producing a product, such as a container, by moulding and cutting of the parison 38 and press-fitting its cut portion; and 41, a pinch-off for cutting the parison 38 between the mating faces of the left and right moulds 39 and 40 to press-fit the cut portion.

In order to mould the supply materials into the parison 38, the cylinder 3 is extended or retracted to move the core 2 vertically to thereby adjust the width of the annular slit 6 between the mandrel 4 and the die 5.

The extruders 22-24 are then actuated to supply the respective accumulators 7 and 11, 8 and 10 and 9 with different feed materials such as ultra-macromolecular polyethylene, adhesive polyethylene and nylon, depending on requirements.

The accumulators 7-11 are hereinafter called the 1st to 5th layer accumulators respectively in order of proximity to the core 2, i.e. from the inside to the outside. The ultra-macromolecular polyethylene supplied to the 1st and 5th layer accumulators 7 and 11 is to be attached to the nylon supplied to the 3rd layer accumulator 9; but this is not directly possible. Accordingly, adhesive polyethylene is supplied to the 2nd and 4th accumulators 8 and 10 for attachment to the ultra-macromolecular polyethylene to the nylon.

Finally, the injection cylinders 33-37 are respectively extended to move the annular plungers 28-32 downward to extrude the feed materials 25-27 stored in the accumulators 7-11 through the passages 12-16 out through the slit 6 thereby forming a five-layered cylindrical parison 38.

The parison 38 thus formed is finished into a product such as a container by moulding and cutting of the parison 38 and press-fitting between the 1st layer materials 25 at the cut portion by means of the mould halves 39 and 40 below the head body 1 followed by the application of a blowing pressure within the parison to press it into a shape which conforms with that of the mould.

However, this parison head suffers from several problems:

Due to the fact that the passages 12-16 at the lower ends of the accumulators 7-11 are always open when the feed materials 25-27 are supplied to the accumulators 7-11, they may partially flow out from the accumulators 7-11 through the passages 12-16 to the slit 6. (The higher the fluidity of the feed materials, the more they tend to flow out. In the above example, nylon has the highest fluidity). The feed materials 25-27 thus flowing out may cause turbulence in the subsequent flow of the feed materials 25-27 from the accumulators 7-11 when they are extruded from the accumulators through the slit 6. For example, as shown in Figure 2, the 3rd layer feed material 27 may locally break through the 1st layer feed material 25 inwardly into the parison 38, whereby a well-regulated five-layered structure is not produced from the parison 38.

Such failure to produce a well-regulated five-layer structure from the parison 38 may result in the 3rd layer feed material 27, which breaks locally into the parison 38 to interfere with the press-fitting of the 1st layer feed material 25 of the parison 38 being moulded and cut by the moulds 39 and 40, resulting in splitting of the press-fit portion of the product.

It is thus an object of the present invention to provide a parison head for use with a multi-layer blow moulding machine which can form a parison with well-regulated layers.

According to the present invention, a parison head of the type referred to above is characterised by a valve including an annular valve body in at least one of the passages and biasing means urging the valve body into contact with the valve seat, the valve being arranged to be opened when the pressure of the feed material in the passage exceeds a predetermined value.

In practice, it is likely that only the passage associated with the accumulator or accumulators for the feed material of the highest fluidity will be provided with such a valve, though all the passages could be provided with such a valve if desired. When the feed materials are supplied to the accumulators the valve or valves remain closed and there is no premature flow of the feed materials towards the extrusion slit. When the feed materials are to be extruded, the pressure of the feed materials in the accumulators is increased and the valve or valves are opened by the pressure applied to them by the associated feed material so that all the feed materials flow through the passages and are extruded from the slit. The invention also embraces a moulding machine including such a parison or extrusion head.

Further features and details of the invention will be apparent from the following description of certain specific embodiments which is given by way of example with reference to Figures 3 to 7 of the accompanying drawings, in which:-

Figure 3 is an enlarged sectional view of the connection between the annular flow passages and the slit in a preferred embodiment of parison head in accordance with the present invention;

Figure 4 is a sectional view of a modification of the valve body shown in Figure 3;

Figure 5 is a sectional view similar to Figure 3, of a further embodiment of the present invention;

Figure 6 is a sectional view similar to Figure 3, of a still further embodiment of the present invention; and

Figure 7 is a perspective view of the elastic body used in Figure 6.

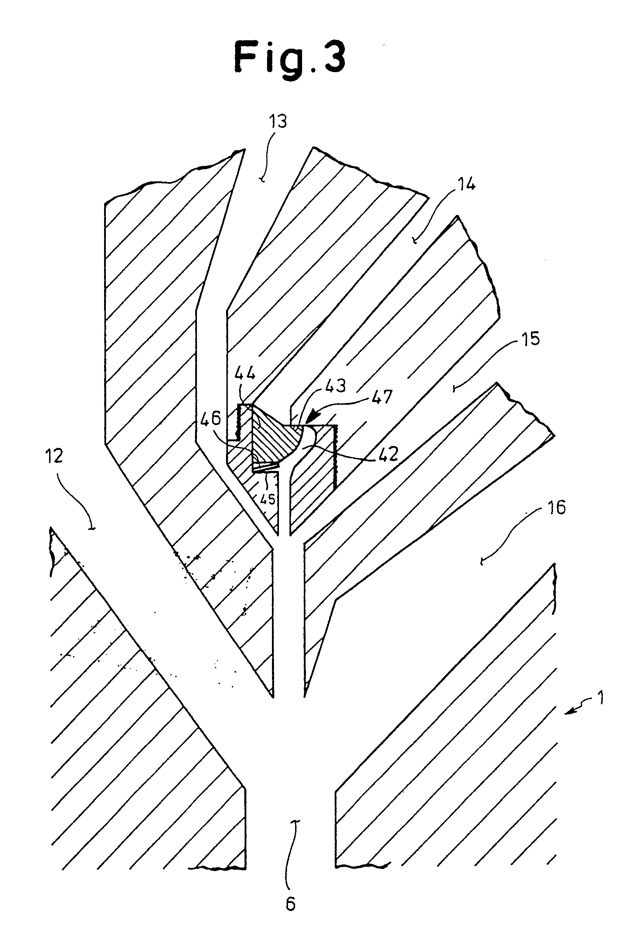

Figure 3 shows that part of a parison head in accordance with the invention at which the annular flow passages communicate with the slit. The other parts are substantially the same as those of the known machine shown in Figure 1, and references to such other parts are in relation to Figure 1.

An annular valve chamber 42 is formed in the passage 14 for the 3rd feed material which connects the accumulator 9 with the slit 6. Adjacent the position where the chamber 42 communicates with the passage 14 upstream of it there is an annular valve seat 43. An annular valve body 44 adapted to form a seal with the seat 43 is accommodated in the chamber 42. A wave spring 46 is disposed between the valve body 44 and a step or shoulder 45 in the chamber 42 to bias the valve body 44 towards the seat 43, that is to say in the closing direction. The components 43 and 44 constitute a valve 47 which is arranged to open when the pressure of the feed material 27 in the passage 14 reaches a predetermined value.

A further valve or valves 47 may alternatively or additionally be provided in any or all of the passages 12,13,15 and 16.

The procedure for extruding a parison 38 is the same as that described in relation to Figure 1.

When the feed materials 25-27 are supplied, the valve body 44 of the valve 47 is initially biased by the wave spring 46 to abut on the valve seat 43 and close the passage 14 so that the feed 27 with the highest fluidity supplied to the 3rd accumulator 9 is prevented from flowing out of the passage 14 to the slit 6.

On extrusion of the feed materials 25-27, that is to say on actuation of the annular plungers, the pressure rises in the passage 14 due to movement of the plunger 30 and thus causes the valve body 44 of the valve 47 to move away from the valve seat 43 against the force of the wave spring 46. The valve 47 is thus opened and the feed material 27 with the highest fluidity is extruded through the valve chamber 42 to the slit 6 in the usual manner with the other feed materials.

Accordingly, when the feed materials 25-27 are injected into the accumulators, the feed material 27 with the highest fluidity is prevented from prematurely flowing out of the accumulator 9 through the passage 14 to the slit 6. Thus, on extrusion of the feed materials 25-27, any turbulence in their flow due to premature flow of the feed material 27 into the slit 6 is prevented, whereby the finished parison 38 has a well-regulated five-layered structure.

As a result, when the cutting of parison 38 and the press-fitting of the cut portion is performed by the mould halves 39 and 40 below the head body 1, imperfect press-fitting is prevented which might otherwise occur by local breaking through of the 3rd feed material 27 into the 1st feed material 25.

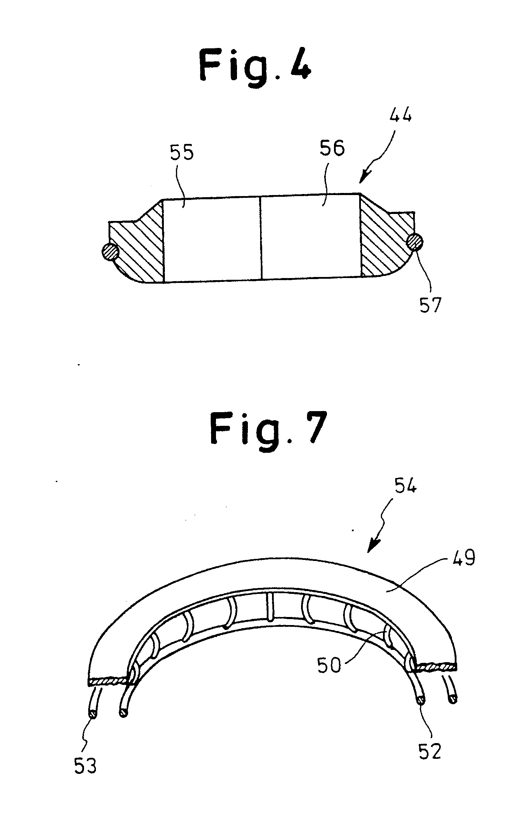

Figure 4 shows a modification of the valve body 44 of Figure 3 which is constituted by two semi-annular valve bodies 55 and 56 connected by a hoop 57, such as snap ring or shrink-fit ring. Thus the valve body 44 may be a single component or a combination of two or more components.

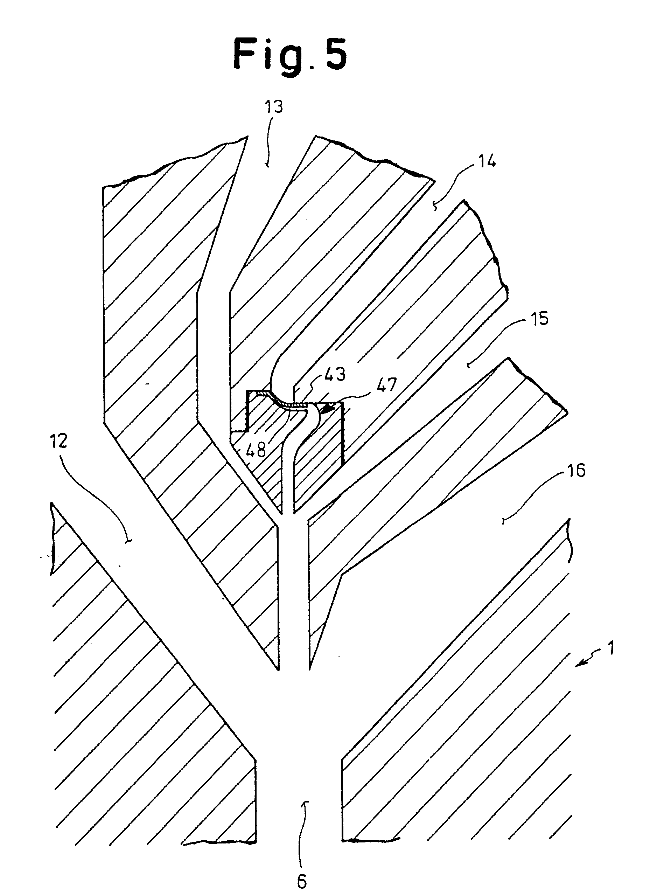

Figure 5 shows a further embodiment of the present invention which is very similar to that described above except that the valve body 48 is in the form of a wave spring. This embodiment can provide the same effects as those of the above embodiment.

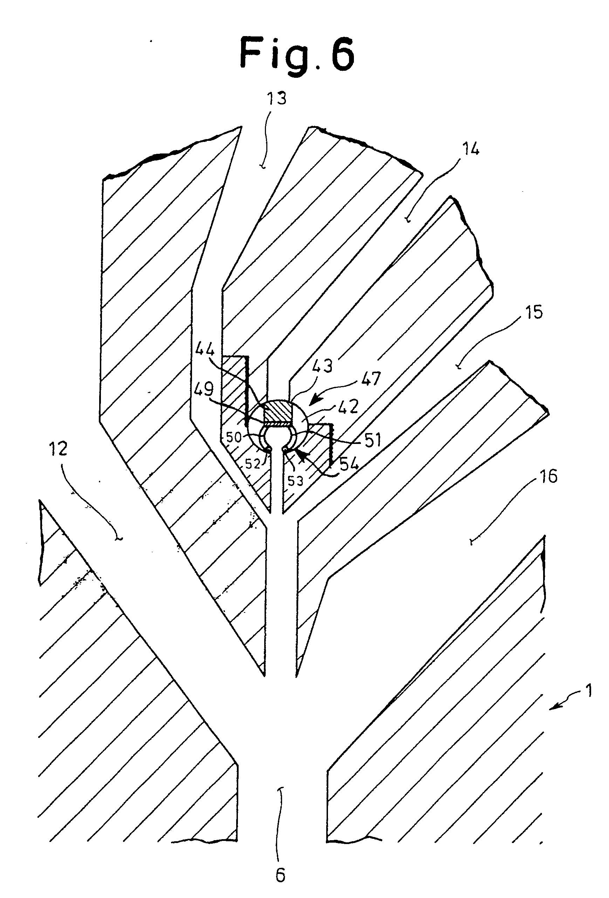

Figures 6 and 7 show a still further embodiment of the present invention which is again similar to that described above except that an elastic member 54 is used instead of the wave spring 46. The elastic member 54 comprises a plurality of downwardly extending, circumferentially spaced, elastic legs 50 and 51 connected to the inner and outer edges, respectively, of an annular plate 49. The elastic legs 50 and 51 are connected at their lower ends to rings 52 and 53, respectively. The annular plate 49 carries the annular valve member 44 which is urged by the resilience of the legs 50 and 51 against the valve seat 43. When the pressure rises in the passage 14 the valve member 44 is moved downwardly against the resilience of the legs 50 and 51 and this embodiment can thus provide the same effects as those of the above-mentioned embodiments.

It will be understood that the parison head according to the present invention is not limited to the embodiments described above and that various modifications may be made. For example, the valve may be of any suitable construction; the number of the layers with which the parison is to be moulded may be varied at will; and a valve may be provided in all or any desired combination of the passages.

material and thus also constitutes the biasing means.

## Claims

1. A parison head for use in a multi-layer blow moulding machine comprising a head, a core within the head, a mandrel at one end of the core which, together with the head, defines an annular extrusion slit, a plurality of annular accumulators concentric with the core and a plurality of annular passages, each connecting one end of a respective accumulator with the slit, characterised by a valve (47) including an annular valve body (44;48) in at least one (14) of the passages (12 to 16) and biasing means (45;48;50,51) urging the valve body into contact with a valve seat (43), the valve being arranged to be opened when the pressure of the feed material in the passage (14) exceeds a predetermined value.

2. A parison head as claimed in claim 1 characterised in that the biasing means constitutes separate resilient means (45;50,51) acting on the valve body (44).

3. A parison head as claimed in claim 1 characterised in that the valve body (48) is of resilient

# Fig.1

# Fig. 2

EP 0 430 596 A1

# Fig.3

# Fig.4

55    56    44

57

# Fig.7

54

49

50

53    52

# Fig. 5

# Fig.6

European
Patent Office

**EUROPEAN SEARCH REPORT**

Application Number

**EP 90 31 2759**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-2 332 121  (RAYCHEM APS)<br>* Page 7, line 34 - page 9, line 13; figure 3 *<br>— — — | 1-3 | B 29 C<br>47/20 |
| A | GB-A-1 456 198  (IMPERIAL CHEMICAL INDUSTRIES LTD)<br>* Figures *<br>— — — | 1 | |
| A | JP-A-5 312 077  (IKEGAI IRON WORKS)<br>* Figures 5,6 *<br>— — — | 1 | |
| A | DE-A-3 439 285  (EXCELL CORP.)<br>* Figures 9,11 *<br>— — — | 1 | |
| A | US-A-4 056 344  (J.H. LEMELSON)<br>* Figures *<br>— — — | 1 | |
| A | US-A-3 386 132  (E. FISCHER)<br>* Figures *<br>— — — | 1 | |
| A | FR-A-2 299 957  (ISHIKAWAJIMA-HARIMA JUKOGYO K.K.)<br>* Figures *<br>— — — — — | 1 | TECHNICAL FIELDS SEARCHED (Int. Cl.5)<br><br>B 29 C |

The present search report has been drawn up for all claims

| Place of search | Date of completion of search | Examiner |
|---|---|---|
| The Hague | 28 February 91 | BELIBEL C. |